# EUROPEAN PATENT APPLICATION

(11) **EP 1 826 062 A1**
(43) Date of publication of application: **29.08.2007**
(21) Application number: 05735161.1
(22) Date of filing: 22.04.2005
(51) Int. Cl.: B60Q 1/44

(54) **BRAKING INDICATOR DEVICE**

(30) Priority: 07.10.2004 ES 200402383
(71) Applicant: De La Torre Barreiro, José Luis, 28210 Valdemorillo (Madrid) (ES); Esteban Azpiroz, Francisco Lorenzo, 28020 Madrid (ES); Moro Garcia, Juan, 28660 Boadilla Del Monte (ES)
(72) Inventor: De La Torre Barreiro, José Luis, 28210 Valdemorillo (Madrid) (ES); Esteban Azpiroz, Francisco Lorenzo, 28020 Madrid (ES); Moro Garcia, Juan, 28660 Boadilla Del Monte (ES)
(74) Representative: Esteban Perez-Serrano, Maria Isabel
(86) International application number: PCT/ES2005/070049
(87) International publication number: WO 2006/040382

(57) **Abstract**

Braking indicator device which operates and is placed independently of the braking means of the vehicle in which it operates, acting as a second brake light, being provided with means for detecting a deceleration based on inertial sensors, as well as indicator means, and is additionally provided with means for connection to the vehicle braking means that allow to indicate that the braking means of the vehicle have been actuated, said connection being by cable or wireless. As a power supply it is provided with batteries, and may be complemented by solar plates housed in the device. It can also have a connector for connection to a charger and inductive means for recharging the battery.

## Description

### OBJECT OF THE INVENTION

The object of the present invention is a braking indicator device provided with illumination means to indicate that braking is taking place, which can be attached to any object in order to indicate that it is braking.

The invention is characterised by the fact that the braking indicator device is autonomous and independent, not requiring for activation any connection to the braking means activating the device.

Its constructive characteristics determine an autonomous and independent braking indicator device that can be attached to any part of an object, allowing to know whether said object is undergoing a significant deceleration in its motion.

Therefore, the present invention lies in the field of braking indicator devices, and more specifically among those that are not provided with any connection to the braking means for its activation.

### BACKGROUND OF THE INVENTION

There are several braking indicator means, such as those incorporated on motorcycle helmets, such as the one described in Spanish Utility Model with publication number ES1031410 U, in which a box is attached to the rear of a helmet, said box housing batteries which power leds or light sources through cables and an interposed switch.

As can be clearly seen, this helmet is simply a continuous light that does not act as a braking indicator in any case.

Patent GB 2374401 describes light means to indicate that braking is taking place. The device is attached to a helmet either on both sides or on the rear, and is provided with a pad at its union to the helmet to absorb vibrations. The braking indicator lamps are connected to the braking and indication system by a cable or a wireless connection.

This system does indicate that braking is taking place but requires a connection with the motorcycle braking system, either by a cable or a wireless connection, and in addition does not allow gauging the braking intensity.

Therefore, the object of the present invention is a braking indicator device that can be installed anywhere and in which the braking indication means are activated independently of the braking means provided on the vehicle on which it is installed.

### DESCRIPTION OF THE INVENTION

The invention of a braking indicator device is basically an autonomous device that allows knowing whether the body to which it is attached has undergone a deceleration that merits indication.

The device is provided with braking detection means. The braking detection means are inertial sensors which in case of a sudden braking will activate a set of lamps for a specified time, or in which the light emitted by said lamps can be proportional to the deceleration.

This device can be attached to a vehicle as a second brake light, to a helmet, or to the body of a motorist, in every case with an autonomous operation.

The braking device object of the invention is provided with inertial means which will activate illumination means, as during the braking the entire body will tend to move forward due to its inertia.

It may also be the case that it is necessary to indicate not only that braking is taking place while in motion, but also that the brakes are activated when the object is stopped. In this case, the system will be connected to the braking means installed on the vehicle, activating the indication means provided on the device of the invention.

The indicator device may be provided with two different sets of lamps to indicate different types of braking:
a brusque deceleration;
the vehicle on which the device of the invention is installed is stopped and its braking means are activated.

This system allows differentiating the type of braking if each braking type actuator is connected to a different set of lamps.

In addition, the system of the braking indicator device can be used as a means for indicating the location of an accident, and specifically the location of an injured person. This is performed by making the indicator lamps flash according to a specific sequence. This would occur when a brusque deceleration is followed by a change in position and then a sudden stop.

### DESCRIPTION OF THE DRAWINGS

To complete the description being made and in order to aid a better understanding of the characteristics of the invention, a set of drawings is accompanied where the most significant details of the invention are shown for purposes of illustration only and in a non-limiting sense:

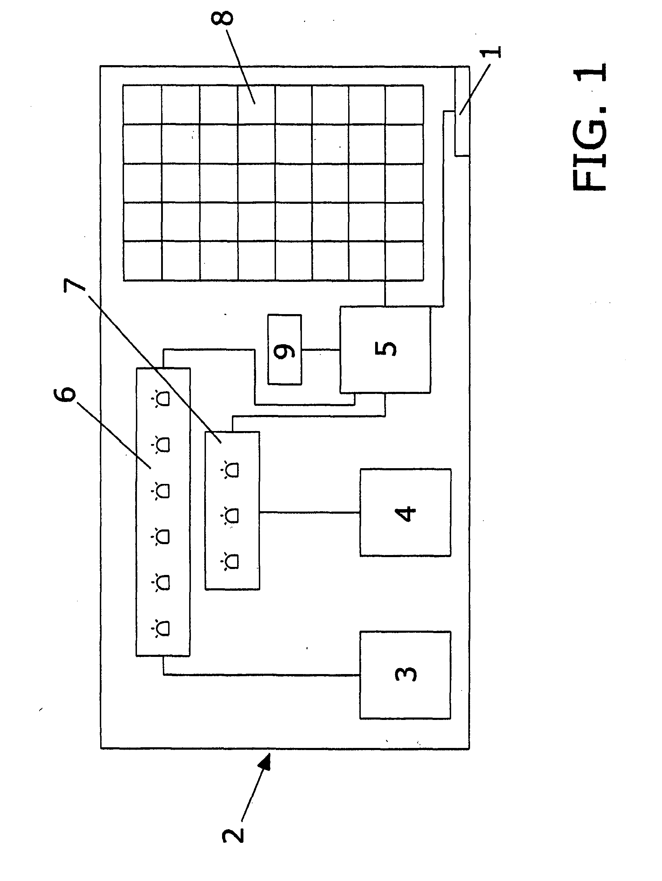

Figure 1 shows a schematic representation of the elements that compose the braking indicator device.

### PREFERRED EMBODIMENT OF THE INVENTION

In view of the figures referred to above, a description of a preferred embodiment of the invention and an explanation of the drawings are provided below.

Figure 1 shows the elements conforming the braking indicator device (2), which can be used as a second brake light, with the indicator means placed on the device (2) itself.

This device is characterised by its autonomous operation as well as the possibility of attaching it to any part of vehicle where an additional braking light is desired. In this sense, it may be placed on a helmet, the body of a vehicle or a motorist's jacket.

The device (2) is provided on one hand with inertial sensors (3) or any other sensor that detects a brusque deceleration. Said inertial sensors are connected to illumination means (6) which will have a specific illumination intensity.

In addition, in order to allow indicating the actuation of the brake while stopped, or a deceleration too slight to activate the illumination means (6), it is provided with means (4) for connection to the vehicle's braking system. The connection between the vehicle braking system and the means installed in the device object of the invention may be by a cable or by wireless means, using a radio frequency signal.

Said connection means (4) receive the indication that the vehicle braking system is being used, and activate illumination means (7), which may have a different intensity than the aforementioned illumination means, preferably having a lower intensity. In this way, in the absence of a deceleration strong enough to activate the illumination means (6) and when the vehicle braking means are actuated, the illumination means (7) will be activated.

Normally, a brusque deceleration is caused by the action of the vehicle's braking means, so that both illumination means (6) and (7) will be activated simultaneously.

The proposed device allows discriminating the type of braking that is taking place by the illumination means that are activated, as in the case of a brusque deceleration produced by the vehicle's brakes the illumination means of both detection means will be activated, while in the absence of a deceleration strong enough to activate the means incorporated in the device while the vehicle's braking means are actuated on, the associated illumination means are activated and the illumination intensity will be lower.

The assembly is powered by a battery (5) housed inside the device that is attached to the helmet.

In order to provide the assembly with a greater autonomy o operation in combination with the battery (5), the assembly is provided with solar plates (8) that recharge the battery and provide sufficient power to the illumination means.

As the batteries may be discharged, the device includes a connector (1) for charging the batteries with a charger.

Optionally, as a means for improving its autonomy the device object of the invention can be provided with means (9) for recharging the battery (5) by induction.

It is not considered necessary to extend this description further for any expert in the field to understand its scope and the advantages derived from it.

The materials, shape, size and arrangement of its component elements may vary as long as the essence of the invention is not affected.

The terms used in this description must be understood in a wide and non-limiting sense.

## Claims

1. Braking indicator device **characterised in that** it operates independently from the braking means provided in the vehicle to which it is attached, acting as a second brake light; the device has an autonomous operation and can be placed anywhere, for which purpose it is provided with braking detection means and braking indication means connected to each other, and with power supply means.

2. Braking indicator device according to claim 1, **characterised in that** the braking detection means consist of inertial sensors that detect a deceleration, said sensors being incorporated in the braking detection and indicator device.

3. Braking indicator device according to claim 1 or 2, **characterised in that** the braking indication means are illumination means.

4. Braking indicator device according to claim 3, **characterised in that**, in addition to the braking detection means, means are provided for connection to the braking means of the vehicle, connected to either the aforementioned illumination means or to other illumination means.

5. Braking indicator device according to claim 4, **characterised in that** the connection between the braking indicator device and the vehicle braking means is performed by a cable.

6. Braking indicator device according to claim 4, **characterised in that** the connection between the braking indicator device and the vehicle braking means is performed by a wireless connection using radio frequency signals.

7. Braking indicator device according to any of the above claims, **characterised in that** the power supply means consists of a battery housed inside the braking indicator device.

8. Braking indicator device according to claim 7, **characterised in that** the battery operation is complemented by solar plates housed in the device.

9. Braking indicator device according to claim 7 or 8, **characterised in that** a connector (1) is placed on the device to recharge the batteries with a charger.

10. Braking indicator device according to claim 7 or 8, **characterised in that** the device is provided with means (9) for recharging the battery (5) by induction.

11. Braking indicator device according to claim 3, **characterised in that** the illumination means are activated for a specified time or **in that** the light emitted is proportional to the deceleration.

12. Braking indicator device according to claim 3, **characterised in that** the elimination means flash according to a specified sequence acting as a means to indicate that an accident has occurred, which takes place when a brusque deceleration is followed by a change of position and a sudden stop.
